# EUROPÄISCHE PATENTANMELDUNG

(11) **EP 3 021 107 A1**
(43) Veröffentlichungstag der Anmeldung: **18.05.2016**
(21) Anmeldenummer: 15193892.5
(22) Anmeldetag: 10.11.2015
(51) Int. Cl.: G01N 21/71, G01J 3/28, G01J 3/443, G01N 21/31, A61B 6/00, B23K 26/40

(54) **VORRICHTUNG ZUR UNTERSUCHUNG EINER BIOLOGISCHEN PROBE AUF KONTRASTMITTEL**

(30) Priorität: 11.11.2014 DE 102014222997
(71) Anmelder: Laserfin Srl., 20123 Milano (IT)
(72) Erfinder: Ferrario, Fabio, 10247 Berlin (DE); Ferrario, Angelo, 21010 Crenna di Gallerate, Varese (IT)
(74) Vertreter: Gulde & Partner

(57) **Zusammenfassung**

Die vorliegende Erfindung betrifft eine Vorrichtung zur laserinduzierten Plasmaspektroskopie für die Detektion eines in einer Probe enthaltenen Elements. Die erfindungsgemäße Vorrichtung umfasst eine gepulste Laserquelle (10) zur Erzeugung eines Plasmas (16) einer Probe (12) und einen Detektor (14) zur Detektion eines Spektrums der von dem erzeugten Plasma (16) emittierten Strahlung, sowie eine Auswerteeinheit (18) zur Detektion des Kontrastmittels aus dem detektierten Spektrum, wobei die gepulste Laserquelle (10) ausgebildet ist, einen ersten Laserpuls (20) mit einem zeitlichen Abstand zwischen 100 ps und 100 µs zu einem zweiten Laserpuls (22) zu erzeugen. Die Probe kann eine biologische Probe sein, die ein Kontrastmittel enthält, das detektiert werden soll. Typische Kontrastmittel in klinischen Anwendungen sind Gadolinium (Gd) sowie Jod (I).

## Beschreibung

Die vorliegende Erfindung betrifft eine Vorrichtung zur Detektion eines in einer biologischen Probe enthaltenen Kontrastmittels, insbesondere Gadolinium oder Jod. Weiterhin ist ein Verfahren zur Detektion des Kontrastmittels Gegenstand der Erfindung.

Fortschritte in der onkologischen Chirurgie hängen stark von den Fortschritten im Bereich der Visualisierung ab, zum Beispiel bei der Darstellung von Tumoren. Sowohl prä- als auch intraoperativ stellen diese Techniken für den Chirurgen einen großen Vorteil dar. Zuletzt erzielte Erfolge in diesem Forschungsbereich stellen einen weiteren Schritt in Richtung der sogenannten bildgeführten Chirurgie dar. Präoperative Visualisierung versorgt den Chirurgen mit wertvollen dreidimensionalen Informationen zu den anatomischen Charakteristika des spezifischen Patienten. Diese Informationen können ebenso in einen chirurgischen Workflow eingebettet werden und im Operationssaal angezeigt werden. Diese Art der chirurgischen Navigation beinhaltet sowohl Konzepte der Bilderfassung, der virtuellen oder erweiterten Realität sowie des Deformationsausgleichs. Zwischen den erzeugten Bildern und der interoperativen Anatomie des Patienten werden Lagebeziehungen hergestellt, so dass Organe, Instrumentarium, die Anordnung vitaler Strukturen und auch die Randbereiche von Tumoren bereits vor dem Einschnitt visualisiert und aktiv angezeigt werden können.

Trotz aller Fortschritte findet eine Visualisierung und Übertragung präoperativer Untersuchungsergebnisse in den Bereich der Chirurgie häufig nicht in ausreichender Geschwindigkeit und Qualität statt. Es besteht daher ein großer Bedarf, klinische Methoden und Vorrichtungen zu entwickeln, die es ermöglichen, die intraoperative Unterstützung des Chirurgen zu verbessern.

In dem Bereich der Onkologie besteht eine Möglichkeit, Krebs-Gewebe-Probe ex-vivo zu untersuchen. Diese Methode ist sowohl zeit- als auch kostenintensiv. Bei der Planung chirurgischer Prozeduren stellen Visualisierungstechnologien, wie zum Beispiel Röntgen und Computertomografie, Magnetresonanztomografie sowie Ultraschall fundamentale Werkzeuge dar, die während einer laufenden Operation jedoch nur begrenzt einsetzbar sind.

Aus der Vielzahl an diagnostischen Techniken, die zur in Situ und in Vivo Visualisierung von Tumoren entwickelt worden sind, gelang es bisher keiner, die erforderliche Sensibilität, Einfachheit, Echtzeitfähigkeit sowie die Möglichkeit zur unmittelbaren in-situ- und in-vivo-Detektion von Tumoren zu erreichen.

Es ist daher Aufgabe der vorliegenden Erfindung, ein Verfahren und eine Vorrichtung zur in-situ- und in-vivo-Detektion von Kontrastelementen in einer Probe zu schaffen, wobei die erforderlichen Analysen in Echtzeit sowie mit guter räumlicher und spektraler Auflösung durchgeführt werden können.

Diese Aufgabe wird erfindungsgemäß durch eine Vorrichtung, die die Merkmale des Patentanspruchs 1 aufweist, sowie durch ein erfindungsgemäßes entsprechendes Verfahren gelöst, welches im Folgenden beschrieben wird. Zweckmäßige Ausgestaltungen der Erfindung sind, sofern sie sich auf eine erfindungsgemäße Vorrichtung beziehen, in den Unteransprüchen enthalten.

Die Idee der vorliegenden Erfindung besteht darin, die Präsenz von Kontrastmittel, die gegenwärtig zum Beispiel für die Magnetresonanztomografie oder die Röntgenstrahlencomputertomografie verwendet werden, in Geweben, in Echtzeit und an Ort und Stelle während der Operation direkt zu detektieren. Erfindungsgemäß kommt dabei das Verfahren der laserinduzierten Plasmaspektroskopie zum Einsatz. Durch einen geeigneten Laser wird zunächst ein Plasma aus einem kleinen Volumen von biologischem Gewebe erzeugt und dann das Emissionsspektrum des Kontrastmittels, das von Interesse ist, detektiert, sofern dieses in der Probe vorhanden war. Typische Kontrastmittel in klinischen Anwendungen sind unter anderem Gadolinium (Gd) sowie Jod (I).

Ein besonderer Vorteil des erfindungsgemäßen Verfahrens besteht in der Möglichkeit des Chirurgen, die auf konventionellem Wege präoperativ gesammelten Informationen über den Tumor in Echtzeit und an Ort und Stelle mit dem Messergebnis abzugleichen. Die so gewonnenen Erkenntnisse stellen eine Entscheidungshilfe bei der Durchführung operativer Schritte dar. Weitere Vorteile sind, dass keine Vorbereitung der Probe erforderlich ist, dass nahezu keine Beschädigung von lebendem Gewebe stattfindet und dass die Untersuchung mit hoher Genauigkeit erfolgen kann.

In einer vorteilhaften Ausgestaltung der erfindungsgemäßen Vorrichtung sowie des erfindungsgemäßen Verfahrens werden mit zeitlicher Verzögerung zu dem ersten Laserpuls einer zweiter oder mehrere weitere Laserpulse erzeugt, die auf das gleiche Ziel gelenkt werden. Hierdurch wird zum einen vorteilhafterweise der Plasmaschildeffekt reduziert und zum anderen die Plasmatemperatur derart verbessert, dass die Emissionsintensität der Elemente des Kontrastmittels verbessert wird, die dadurch zum Beispiel besser messbar wird.

Die Wellenlänge des ersten Pulses kann mit einem Energieniveauübergang des Gewebes übereinstimmen (Resonant Laser Ablation).

Die Wellenlänge des zweiten Pulses kann unterschiedlich zu der des ersten sein.

In diesem Fall ist es vorteilhaft um ein besseres Signal-zu-Rauschen-Verhältnis zu erzeugen, Fluoreszenz der zu untersuchenden Energieniveauübergänge zu erregen. Somit wird diese Wellenlänge so gewählt, dass sie mit einem Energieniveauübergang des Kontrastelements übereinstimmt (Resonantly enhanced Libs).

Weiterhin ist eine Vorrichtung Gegenstand der vorliegenden Erfindung, mit der das vorangehend beschriebene Verfahren durchgeführt werden kann. Es handelt sich dabei um eine Vorrichtung zur Detektion von in einer Probe enthaltenem Gadolinium oder Jod, aufweisend eine gepulste Laserquelle zur Erzeugung eines Plasmas einer Probe, aufweisend:
eine gepulste Laserquelle zur Erzeugung eines Plasmas einer Probe, wobei die gepulste Laserquelle ausgebildet ist, einen ersten Laserpuls mit einer Pulsdauer zwischen 100 fs und 500 ns, einer Wellenlänge zwischen 150 nm und 3000 nm und einer Energie zwischen 10 nJ und 2 J zu erzeugen und weiterhin ausgebildet ist, einen zweiten Laserpuls mit einer Pulsdauer zwischen 100 fs und 500 ns, einer Wellenlänge zwischen 150 nm und 3000 nm und einer Energie zwischen 10 nJ und 2 J zu erzeugen und die gepulste Laserquelle weiterhin ausgebildet ist, den ersten Laserpuls mit einem zeitlichen Abstand zwischen 100 ps und 100 µs zum zweiten Laserpuls zu erzeugen, einen Detektor zur Detektion eines Spektrums der von dem erzeugten Plasma emittierten Strahlung sowie eine Auswerteeinheit zur Detektion des Gadolinium oder Jod aus dem detektierten Spektrum. Erfindungsgemäß ist vorgesehen, dass der Detektor und die Auswerteeinheit eingerichtet sind, das detektierte Spektrum mit einem Referenzspektrum für Gadolinium oder Jod zu vergleichen.

Der Vorteil der erfindungsgemäßen Vorrichtung besteht darin, dass insbesondere eine Detektion von Gadolinium in Echtzeit sehr gut möglich ist. Die Detektion ist zudem außerordentlich sicher und effizient. Durch den Vergleich des detektierten Spektrums gezielt mit dem spezifischen Referenzspektrum wird die benötigte Zeit für eine Auswertung stark reduziert. Gadolinium als Kontrastmittel kommt zudem im Bereich klinischer Anwendungen, beispielsweise bei der Magnetresonanztomografie, eine besonders große Bedeutung zu. Somit ist die erfindungsgemäße Vorrichtung vielfältig einsetzbar, beispielsweise zur Echtzeit-Unterstützung von Entscheidungsfindungen in einer laufenden Operation in der Onkologie. Auch Jod lässt sich mit der erfindungsgemäßen Vorrichtung sehr gut detektieren und spielt neben Gadolinium eine große Rolle in der Medizin.

In vorteilhafter Ausgestaltung der erfindungsgemäßen Vorrichtung ist diese mittels Band-Pass-Filter oder anderer dem Fachmann bekannter Filterelemente für eine Detektion einer Emissions-Wellenlänge eingerichtet, die der von Gadolinium oder Jod entspricht. Insbesondere kann durch Filterung die Menge an Daten für den Vergleich mit dem Referenzspektrum signifikant reduziert werden. Dies ist besonders vorteilhaft für die Detektion in Echtzeit.

Bevorzugt umfasst die Vorrichtung weitere Mittel zur Verbesserung der Detektion von Gadolinium oder Jod in Echtzeit. So umfasst die Auswerteeinheit bevorzugt echtzeitfähige Rechen- und Speichereinrichtungen sowie eine Datenbasis mit den Referenzspektren von Gadolinium und/oder Jod und benötigte Vergleichsalgorithmen. Der zuständige Fachmann ist in der Lage diese Merkmale anhand allgemein bekannter Kriterien für eine Echtzeitfähigkeit auszugestalten. Insbesondere berücksichtigt er dabei, dass bei der Detektion von Gadolinium oder Jod bevorzugt eine Ja- oder Nein-Entscheidung zu treffen ist, inwiefern das betreffende Element in der Probe vorhanden war. Somit ist eine Reduktion der auszuwertenden Daten auf ein Minimum möglich, beispielsweise durch Glättung von Mess- und Vergleichswertkurven sowie durch Definition von Toleranzen unter Vorgabe der geforderten Detektionsgenauigkeit. Die Vergleichsalgorithmen lassen sich im Kern beispielsweise auf einfache logische Verknüpfungen zurückführen.

Grundsätzlich ist es auch möglich, dass zusätzliche Auswertungen erfolgen. Diese können beispielsweise auf eine Bestimmung der Quantität des Gadolinoums oder Jods richten sowie auf eine Verbesserung der Genauigkeit der Detektion. Ein für den Fachmann maßgebliches Kriterium ist, dass die Auswertung aber stets noch in Echtzeit möglich sein muss.

Echtzeit bedeutet im Zusammenhang mit der Erfindung, dass eine Erzeugung der Ergebnisse der Detektion schnell genug möglich ist, damit ein Chirurg diese in angemessener Zeit zweckmäßig verwerten kann. In beispielsweise einer laufenden Operation kann ein solcher Zweck darin bestehen, eine Entscheidungsgrundlage für die Entfernung von tumorbefallenem Gewebe zu schaffen. Dann ist eine sehr schnelle Detektion gefordert. Wenn beispielsweise bereits entferntes Gewebe zu untersuchen ist, kann eine deutlich höhere Zeit angesetzt werden. Welche Zeit im Einzelnen angemessen ist, legt der zuständige Fachmann in Anbetracht des konkreten medizinischen Gesamtsystems und insbesondere der Bedürfnisse des Patienten und der Untersuchungsaufgabe fest.

Eine Obergrenze für die Zeit, welche die erfindungsgemäße Vorrichtung zur Erzeugung eines ersten Laserpulses bis hin zur Ausgabe des Detektionsergebnisses benötigt, liegt bevorzugt unterhalb von 10 s, weiterhin bevorzugt unterhalb von 5 s, weiterhin bevorzugt unterhalb von 3 s, besonders bevorzugt unterhalb von 1 s und insbesondere bevorzugt unterhalb von 0,1 s.

Neben Gadolinium und Jod lassen sich grundsätzlich auch weitere Kontrastmittel, beispielsweise in der Onkologie, detektieren. Es wurde jedoch gefunden, dass die Detektion bei Jod und Gadolinium besonders gut funktioniert und die Vorteile einer erfindungsgemäß eingerichteten Vorrichtung in den entsprechenden medizinischen Gebieten besonders zum Tragen kommen.

Ein weiterer Vorteil der erfindungsgemäßen Vorrichtung ist, dass durch den zweiten Laserpuls der Plasmaabschirmungseffekt reduziert wird. Durch die hierdurch verbesserten Plasmaeigenschaften beziehungsweise das verbesserte Emissionsverhalten des Plasmas kann die Genauigkeit der Messung deutlich erhöht werden.

In einer vorteilhaften Ausgestaltung der erfindungsgemäßen Vorrichtung beträgt die Dauer des ersten Laserpulses und des zweiten Laserpulses jeweils bevorzugt zwischen 1 ps und 20 ns, besonders bevorzugt zwischen 0,1 ns und 10 ns. Es wurde gefunden, dass so besonders genaue und zuverlässige Ergebnisse bei der Detektion erzielt werden können. In einer vorteilhaften Ausgestaltung der erfindungsgemäßen Vorrichtung umfasst diese Strahlführungsmittel, die ausgebildet sind, elektromagnetische Strahlung zum Gewebe zu leiten. Besonders vorteilhafterweise weist die Vorrichtung einen Spiegelgelenkarm auf, der ausgebildet ist, die Strahlung bis zum Gewebe zu führen, eine Fokussierlinse, die ausgebildet ist, den Strahl auf das Gewebe zu fokussieren und einen dichroitischen Spiegel, der ausgebildet ist, die Plasmastrahlung von der Laserstrahlung zu isolieren.

In einer vorteilhaften Ausgestaltung der erfindungsgemäßen Vorrichtung ist die gepulste Laserquelle mindestens ein Ho:YAG oder Er:YAG mit Güteschalter, wobei die emittierte Mid-Infrarote Wellenlänge augensicher ist.

In einer vorteilhaften Ausgestaltung der erfindungsgemäßen Vorrichtung weist die gepulste Laserquelle eine ebenfalls augensichere Wellenlänge, die kürzer ist als 380 nm, auf.

In einer vorteilhaften Ausgestaltung der erfindungsgemäßen Vorrichtung umfasst die gepulste Laserquelle einen ersten Laser und einen zweiten Laser sowie einen Pulsgenerator, der ausgebildet ist, Pulse mit Puls- und Pausenzeiten im Bereich von 100 ps bis 100 µs bei einer zeitlichen Auflösung von weniger als 10 ps zu erzeugen. Durch diese Leistungsdaten wird vorteilhafterweise eine genaue Abstimmung des ersten und zweiten Laserpulses möglich, um das detektierte Signal zu optimieren.

In einer weiteren vorteilhaften Ausgestaltung der erfindungsgemäßen Vorrichtung umfasst der Detektor Filtereinrichtungen, die ausgebildet sind, die emittierte Laserwellenlänge und die Emissionswellenlängen des Kontrastmittels zu isolieren. Der Vorteil der Isolation der Laserwellenlänge und der Emissionswellenlänge des Kontrastmittels besteht darin, dass die Detektion der Wellenlänge des Kontrastmittels einfacher und genauer wird. Weiterhin können die zugehörigen Filtereinrichtungen vorteilhaft in einer Sonde angeordnet sein, wodurch vermieden wird, dass Laserlicht auf besonders empfindliche Bauteile im Inneren der Vorrichtung trifft beziehungsweise diese beschädigt. Die Detektion der Plasma-Strahlung kann somit vorteilhaft entweder unmittelbar vor der Fokuslinse, oder seitlich in einer Vorrichtung außerhalb der optischen Achse erfolgen.

In einer weiteren vorteilhaften Ausgestaltung verfügt der Detektor über wenigstens eine optische Faser, in die das vom Plasma emittierte Licht eingekoppelt werden kann. Dadurch ist es möglich die Detektion an einem Ort unabhängig von der Strahlungsquelle durchzuführen.

In einer weiteren vorteilhaften Ausgestaltung der erfindungsgemäßen Vorrichtung ist die Auswerteeinheit ausgebildet, die Intensität definierter diskreter Wellenlängen in dem detektierten Emissionsspektrum auszuwerten. Vorteilhafterweise lässt sich über die Intensitätswerte das Vorhandensein bestimmter Elemente von Interesse, zum Beispiel der Kontrastmittel, sicher bestimmen.

In einer weiteren vorteilhaften Ausgestaltung der erfindungsgemäßen Vorrichtung verfügen die Strahlführungsmittel über zumindest einen Scanner. Dieser bietet die Möglichkeit eine definierte und möglichst breite Fläche zu bestrahlen. Der Scanner wird automatisch gesteuert.

In einer weiteren vorteilhaften Ausgestaltung der erfindungsgemäßen Vorrichtung enthält die Sonde ein VBG (volume bragg grating, beziehungsweise Bragg-Gitter) und/oder zumindest einen spektral selektiven dichroitischen Spiegel und/oder Interferenzschmalbandfilter, die ausgebildet sind, die einzelnen Plasma-Emissionswellenlängen des zu untersuchenden Kontrastmittels zu selektieren. Die zentrale Wellenlänge der Filter ist den Emissionsübergängen dieser Elemente angepasst. Die Intensität der filtrierten Strahlung kann dann vorteilhaft mit Hinblick auf eine sowohl qualitative als auch quantitative Auswertung der Konzentration des Kontrastelementes ausgewertet werden. Weiterhin bietet die Auswahl an Komponenten den Vorteil, dass diese vergleichsweise geringe Kosten verursachen. Die Auswertung kann beispielsweise mittels Photomultiplier und/oder Photodioden erfolgen.

In einer weiteren vorteilhaften Ausgestaltung der erfindungsgemäßen Vorrichtung enthält diese spektral dispersive (zur Beugung) Elemente, bevorzugt ein oder mehrere Bragg-Gitter und/oder ein Spektrometer oder eine Kombination aus besagten Mitteln. Um die Empfindlichkeit des Detektors zu maximieren, kann der Spektrometer sich unmittelbar vor der Fokussierlinse befinden. Diese Vorrichtung bietet den Vorteil, dass das komplette emittierte Spektrum ausgewertet werden kann.

In einer weiteren vorteilhaften Ausgestaltung der erfindungsgemäßen Vorrichtung besteht die Fokuslinse aus Zylinderoptiken, womit ein astigmatischer Fleck erzeugt wird. Das Plasmalicht kann dann vorteilhaft, mit einem kohärenten Faserbündel zu einer Vielzahl von Detektoren, zum Beispiel Photodioden oder CCDs, geführt werden. Das bietet den Vorteil an, dass ein oder mehrere Laserpulse räumlich aufgelöste Informationen über den gesamten belichteten Bereich liefern.

In einer weiteren vorteilhaften Ausgestaltung der erfindungsgemäßen Vorrichtung verfügt diese über eine Computerschnittstelle zur Übertragung der Ausgangssignale des Detektors und/oder der Auswerteeinheit. Hierdurch wird vorteilhafterweise eine automatisierte Verarbeitung der Messergebnisse ermöglicht, was insbesondere für die vorteilhafterweise mögliche Echtzeitbestimmung der Messergebnisse von Bedeutung ist. Es wird dadurch auch möglich, in Echtzeit die gesammelten Daten mit denen aus einer vorherigen Magnetresonanztomografie oder anderen Analyse zu vergleichen. Hierdurch können wertvolle Informationen gesammelt werden, da beide Verfahren das gleiche Kontrastmittel benutzen.

Weitere bevorzugte Ausgestaltungen der vorliegenden Erfindung ergeben sich durch die in den Unteransprüchen genannten Merkmale und deren vorteilhafte Kombination.

Die Erfindung wird nachfolgend anhand von Ausführungsbeispielen näher erläutert. Es zeigen:
- Fig. 1: ein Prinzipschaltbild eines erfindungsgemäßen Verfahrens; und
- Fig. 2: das bevorzugte Ausführungsbeispiel einer erfindungsgemäßen Vorrichtung.

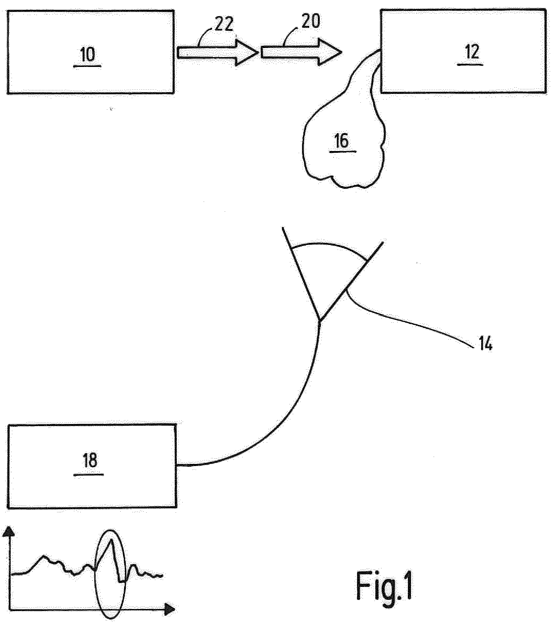

Fig. 1 zeigt ein Prinzipschaltbild eines erfindungsgemäßen Verfahrens zur Detektion eines in einer Probe 12 enthaltenen Kontrastmittels. Eine gepulste Laserquelle 10 erzeugt dabei einen ersten Laserpuls 20 und optional einen zweiten Laserpuls 22, wodurch ein Plasma 16 der Probe 12 erzeugt wird. Ein Detektor 14 detektiert dann ein Spektrum einer Strahlung, die von dem erzeugten Plasma 16 emittiert wird. Eine Auswerteeinheit 18 detektiert dann ein Kontrastmittel aus dem detektierten Spektrum, sofern dieses in der Probe 12 vorhanden war.

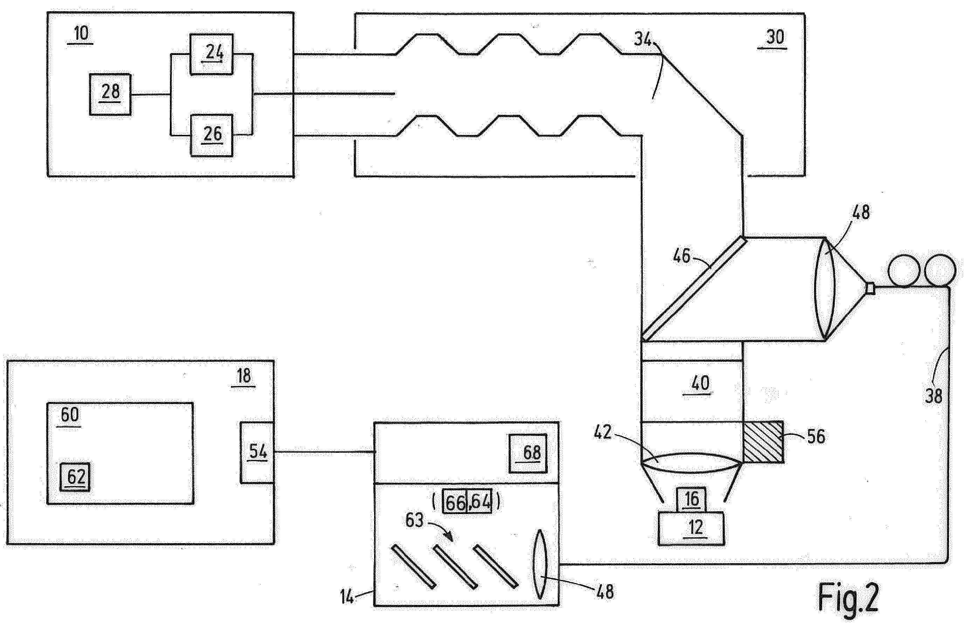

Fig. 2 zeigt die bevorzugte Ausgestaltung einer erfindungsgemäßen Vorrichtung. Diese umfasst eine gepulste Laserquelle 10, bestehend aus einem ersten Laser 24 und einem zweiten Laser 26, die hier beispielweise als Ho:YAG Laser ausgeführt sind und bei einer Wellenlänge von 2,1 µm betreibbar sind. Weiterhin umfasst die gepulste Laserquelle 10 einen Pulsgenerator 28, der ausgebildet ist, Pulse mit Puls- und Pausenzeiten im Bereich von 100 ps bis 100 µs bei einer zeitlichen Auflösung von weniger als 10 ps zu erzeugen.

Die erzeugte Strahlung wird in Strahlführungsmittel 30 eingekoppelt, die einen beweglichen Arm 34 in Form eines Spiegelgelenkarms und optional einen Scanner 40 mit Griffstücken 56 und eine Fokussierlinse 42 aufweisen. Ein dichroitischer Filter und eine Linse 48 koppeln die Plasma-Strahlung in die lichtleitende Faser 38 ein. Die spektralselektiven Komponenten werden in dem Detektor 14 mittels VBGs 63 realisiert. In weiteren Ausführungsbeispielen kann zusätzlich oder anstelle des Volume-Bragg-Gitters 63 auch ein Spektrograph 64 und/oder ein Interferenz-Schmalbandfilter 66 vorgesehen sein. Die Auswertung kann zum Beispiel durch Vergleich des detektierten Spektrums mit einem Referenzspektrum für Gadolinium oder Jod erfolgen.

Die Vorrichtung umfasst weiterhin eine Auswerteeinheit 18, die ausgebildet ist über eine Computerschnittstelle 54 die Ausgangssignale des Detektors 14 aufzunehmen und weiterhin einen Computer 60 umfasst, der Software 62 umfasst, so dass die erfindungsgemäße Vorrichtung ausgebildet ist, ein erfindungsgemäßes Verfahren durchzuführen.

### Bezugszeichenliste

- 10: gepulste Laserquelle
- 12: Probe
- 14: Detektor
- 16: Plasma
- 18: Auswerteeinheit
- 20: erster Laserpuls
- 22: zweiter Laserpuls
- 24: erster Laser
- 26: zweiter Laser
- 28: Pulsgenerator
- 30: Strahlführungsmittel
- 34: beweglicher Arm
- 38: lichtleitende Faser
- 40: Scanner
- 42: Fokussierlinse
- 46: dichroitischer Spiegel
- 48: Linse
- 54: Computerschnittstelle
- 56: Griffstücke
- 60: Computer
- 62: Software
- 63: Bragg-Gitter (VBG)
- 64: Spektrometer
- 66: Interferenz-Schmalbandfilter
- 68: Photodioden oder Photomultiplier

## Patentansprüche

1. Vorrichtung zur Detektion von in einer Probe (12) enthaltenem Gadolinium oder Jods, aufweisend:
eine gepulste Laserquelle (10) zur Erzeugung eines Plasmas (16) einer Probe (12), wobei die gepulste Laserquelle (10) ausgebildet ist, einen ersten Laserpuls (20) mit einer Pulsdauer zwischen 100 fs und 500 ns, einer Wellenlänge zwischen 150 nm und 3000 nm und einer Energie zwischen 10 nJ und 2 J zu erzeugen und einen zweiten Laserpuls (22) mit einer Pulsdauer zwischen 100 fs und 500 ns, einer Wellenlänge zwischen 150 nm und 3000 nm und einer Energie zwischen 10 nJ und 2 J zu erzeugen und die gepulste Laserquelle (10) weiterhin ausgebildet ist, den ersten Laserpuls (20) mit einem zeitlichen Abstand zwischen 100 ps und 100 µs zum zweiten Laserpuls (22) zu erzeugen,
einen Detektor (14) zur Detektion eines Spektrums der von dem erzeugten Plasma (16) emittierten Strahlung,
eine Auswerteeinheit (18) zur Detektion des Gadolinium oder Jod aus dem detektierten Spektrum,
**dadurch gekennzeichnet, dass**
der Detektor (14) und die Auswerteeinheit eingerichtet sind, das detektierte Spektrum mit einem Referenzspektrum für Gadolinium oder Jod zu vergleichen.

2. Vorrichtung nach Anspruch 1, wobei die gepulste Laserquelle (10) einen ersten Laser (24) und einen zweiten Laser (26) umfasst sowie einen Pulsgenerator (28), der ausgebildet ist, Pulse mit Puls- und Pausenzeiten im Bereich von 100 ps bis 100 µs bei einer zeitlichen Auflösung von weniger als 10 ps zu erzeugen.

3. Vorrichtung nach Anspruch 1, wobei die gepulste Laserquelle (10) ausgebildet ist, einen einzelnen Puls mit einer Pulsdauer zwischen 100 fs und 500 ns, einer Wellenlänge zwischen 150 nm und 3000 nm und einer Energie zwischen 10 nJ und 2 J zu erzeugen.

4. Vorrichtung nach einem der vorangegangenen Ansprüche, wobei diese Strahlführungsmittel (30) mit zumindest einem beweglichen Arm (34) in Form eines Spiegelgelenkarms aufweist.

5. Vorrichtung nach Anspruch 4, wobei das Strahlführungsmittel (30) zumindest eine optische Faser oder eine Hohlkernfaser aufweist.

6. Vorrichtung nach einem der vorangegangenen Ansprüche, wobei der Detektor (14) ausgebildet ist, die Intensität definierter Wellenlängen in dem detektierten Emissionsspektrum auszuwerten.

7. Vorrichtung nach einem der vorangegangenen Ansprüche, wobei die Strahlführungsmittel (30) zumindest eine lichtleitende Faser (38) und zumindest eine Fokussierlinse (42) oder einen Fokussierspiegel aufweisen.

8. Vorrichtung nach einem der vorangegangenen Ansprüche, wobei diese einen Scanner (40) umfasst, der ausgebildet ist, eine definierte Fläche zu bestrahlen.

9. Vorrichtung nach einem der vorangegangenen Ansprüche, wobei die Fokussierlinse (42) eine Zylinderlinse oder ein astigmatisches optisches System ist und die Vorrichtung über ein kohärentes Faserbündel verfügt, die ausgebildet ist, die erzeugte Plasmastrahlung zum Detektor zu führen.

10. Vorrichtung nach einem der vorangegangenen Ansprüche, wobei der Detektor (14) zumindest ein VBG (63) oder Interferenz-Schmalbandfilter (66) aufweist.

11. Vorrichtung nach einem der vorangegangenen Ansprüche, wobei der Detektor einen Spektrometer (64) aufweist.

12. Vorrichtung nach einem der vorangegangenen Ansprüche, umfassend eine Computerschnittstelle (54) zur Übertragung der Ausgangssignale des Detektors (14) und/oder der Auswerteeinheit (18).

13. Vorrichtung nach einem der Ansprüche 7 bis 12, wobei die lichtleitende Faser (38) ein kohärentes Faser-Bündel aufweist, die Fokussierlinse (42) Zylinderoptiken aufweist und/oder der Detektor (14) eine Vielzahl von Detektoren, multi Anode Photomultiplier oder ladungsgekoppelte Bauelemente (CCDs) aufweist.
